# EUROPÄISCHE PATENTSCHRIFT

(11) **EP 3 456 464 B1**
(45) Veröffentlichungstag und Bekanntmachung des Hinweises auf die Patenterteilung: **19.10.2022**
(21) Anmeldenummer: 17191292.6
(22) Anmeldetag: 15.09.2017
(51) Int. Cl.: B23Q 1/76, B23Q 1/58

(54) **VORRICHTUNG MIT LÜNETTE**
DEVICE WITH STATIONARY SUPPORT
DISPOSITIF AVEC LUNETTE DE SUPPORT

(43) Veröffentlichungstag der Anmeldung: 20.03.2019
(73) Patentinhaber: AFW Holding GmbH, 4656 Kirchham (AT)
(72) Erfinder: WEINGÄRTNER, Dominik, 4643 Pettenbach (AT)
(74) Vertreter: Hafner & Kohl PartmbB

(56) Entgegenhaltungen:
- DE-A1- 1 402 955
- DE-A1- 2 141 701
- DE-A1- 2 542 959
- JP-A- S5 272 992

## Beschreibung

Die Erfindung betrifft eine Vorrichtung mit einer Lünette zur Abstützung eines mechanisch, insbesondere spanend, zu bearbeitenden, insbesondere länglichen, Werkstücks, umfassend einen in einer Vorrichtung zur mechanischen Bearbeitung eines mechanisch zu bearbeitenden Werkstücks anordenbaren Lünettengrundkörper sowie wenigstens eine an dem Lünettengrundkörper angeordnete oder ausgebildete, zur Abstützung eines mechanisch zu bearbeitenden Werkstücks eingerichtete Abstützeinrichtung, welche wenigstens ein ein abzustützendes Werkstück abstützendes Abstützelement umfasst.

Entsprechende Lünetten sind zur Abstützung mechanisch, insbesondere spanend, zu bearbeitender, insbesondere länglicher, Werkstücke, d. h. z. B. Wellen, aus dem Bereich der mechanischen Werkstückbearbeitung, d. h. insbesondere dem Bereich des Drehens und Fräsens, an und für sich bekannt. Typischerweise umfassen entsprechende Lünetten einen Lünettengrundkörper mit mehreren an diesem angeordneten, jeweils wenigstens ein Abstützelement, d. h. z. B. eine Klemm- oder Spannbacke, umfassenden Abstützeinrichtungen, d. h. z. B. Klemm- oder Spannbackeneinrichtungen.

Jeweilige Abstützeinrichtungen sind typischerweise lage- bzw. ortsfest an dem Lünettengrundkörper angeordnet; mit anderen Worten ist die Anordnung jeweiliger Abstützeinrichtungen relativ zu dem Lünettengrundkörper typischerweise nicht veränderbar. Folglich lassen sich mit einer Lünette nur Werkstücke bestimmter, insbesondere querschnittlicher, Dimensionen abstützen. Dies stellt, insbesondere im Hinblick auf die wünschenswerte Möglichkeit einer einfachen flexiblen Abstützung, insbesondere querschnittlich, (deutlich) unterschiedlich dimensionierter, vermittels der Lünette abzustützender Werkstücke, einen verbesserungswürdigen Zustand dar.

JP S52 72992 A offenbart eine Bearbeitungsvorrichtung mit einer Lünette, umfassend: einen Lünettengrundkörper, wenigstens eine an dem Lünettengrundkörper angeordnete Abstützeinrichtung, welche wenigstens ein ein abzustützendes Werkstück abstützendes Abstützelement umfasst, wobei die wenigstens eine Abstützeinrichtung eine Klemm-oder Spanneinrichtung umfasst und das wenigstens eine Abstützelement ein Klemm- oder Spannelement umfasst, wobei die wenigstens eine Abstützeinrichtung in wenigstens einem eine Bewegungsbahn definierenden Bewegungsfreiheitsgrad bewegbar gelagert relativ zu dem Lünettengrundkörper an dem Lünettengrundkörper ausgebildet ist, wobei die wenigstens eine Abstützeinrichtung zwischen einer Betriebsstellung, in welcher eine Abstützung eines abzustützenden Werkstücks möglich ist, und einer Nichtbetriebsstellung, in welcher eine Abstützung eines abzustützenden Werkstücks nicht möglich ist, bewegbar gelagert ist, wobei in der Betriebsstellung der wenigstens einen Abstützeinrichtung eine Passagemöglichkeit für ein Fräswerkzeug geschaffen ist, so dass ein Fräswerkzeug entlang der Längsachse eines vermittels der Lünette abgestützten, mechanisch zu bearbeitenden Werkstücks, über die Passagemöglichkeit in Richtung der Längsachse des Werkstücks die Lünette passieren kann.

Der Erfindung liegt die Aufgabe zugrunde, eine, insbesondere im Hinblick auf die Möglichkeit einer einfachen flexiblen Abstützung, insbesondere querschnittlich, (deutlich) unterschiedlich dimensionierter, vermittels der Lünette abzustützender Werkstücke, verbesserte Vorrichtung mit einer Lünette zur Abstützung eines mechanisch zu bearbeitenden Werkstücks anzugeben.

Die Aufgabe wird durch eine Vorrichtung gemäß Anspruch 1 gelöst. Die hierzu abhängigen Ansprüche betreffen mögliche Ausführungsformen der Lünette gemäß Anspruch 1.

Die hierin beschriebene Lünette dient im Allgemeinen der/zur Abstützung bzw. Lagerung eines mechanisch, d. h. insbesondere spanend, zu bearbeitenden, insbesondere länglichen, Werkstücks. Bei dem Werkstück kann es sich beispielsweise um eine Welle handeln.

Die Lünette umfasst einen in einer Vorrichtung zur mechanischen, insbesondere spanenden, Bearbeitung eines mechanisch zu bearbeitenden Werkstücks anordenbaren Lünettengrundkörper. Bei dem Lünettengrundkörper handelt es sich mithin um denjenigen Bestandteil der Lünette, über welchen diese in einer Vorrichtung zur mechanischen Bearbeitung eines mechanisch zu bearbeitenden Werkstücks, d. h. z. B. einem Dreh- oder Fräszentrum, anordenbar ist; hierfür wird der Lünettengrundkörper in einem hierfür vorgesehenen Aufnahmebereich, typischerweise dem Maschinenbett, einer entsprechenden Vorrichtung aufgenommen. Der Lünettengrundkörper unmittelbar oder mittelbar unter Zwischenschaltung eines Lünettenträgers in einem hierfür vorgesehenen Aufnahmebereich einer entsprechenden Vorrichtung aufgenommen sein.

Die Aufnahme des Lünettengrundkörpers in dem hierfür vorgesehenen vorrichtungsseitigen Aufnahmebereich kann ein Zusammenwirken geeigneter lünettengrundkörperseitiger bzw. lünettenträgerseitiger und aufnahmebereichsseitiger, insbesondere mechanischer, Schnittstellen beinhalten. Die Aufnahme des Lünettengrundkörpers in dem hierfür vorgesehenen vorrichtungsseitigen Aufnahmebereich kann ferner eine bewegbare Lagerung des Lünettengrundkörpers bzw. der Lünette (jeweils gegebenenfalls nebst Lünettenträger) relativ zu der Vorrichtung beinhalten; mithin kann der Lünettengrundkörper bzw. die Lünette (jeweils gegebenenfalls nebst Lünettenträger) gegebenenfalls entlang einer definierten, typischerweise linearen, Bewegungsbahn relativ zu der Vorrichtung bewegt werden.

An dem Lünettengrundkörper sind zwei zur Abstützung bzw. Lagerung eines mechanisch zu bearbeitenden Werkstücks eingerichtete Abstützeinrichtungen angeordnet oder ausgebildet. Die Abstützeinrichtungen umfassen jeweils wenigstens ein ein abzustützendes Werkstück abstützendes Abstützelement.

Eine jeweilige Abstützeinrichtung kann einen Grundkörper, an welchem wenigstens ein entsprechendes Abstützelement angeordnet bzw. ausgebildet ist, umfassen. Bei einer Abstützeinrichtung kann es sich um eine Klemm- oder Spanneinrichtung, d. h. z. B. um eine Klemm- bzw. Spannbackeneinrichtung, bei einem entsprechenden Abstützelement kann es sich entsprechend um ein Klemm- oder Spannelement, d. h. z. B. um eine Klemm- bzw. Spannbacke, handeln.

Die zwei Abstützeinrichtungen sind in wenigstens einem eine Bewegungsbahn definierenden Bewegungsfreiheitsgrad bewegbar gelagert relativ zu dem Lünettengrundkörper an dem Lünettengrundkörper angeordnet bzw. ausgebildet. Im Gegensatz zu den eingangs beschriebenen bekannten Lünetten, welche eine lage- bzw. ortsfeste Anordnung jeweiliger Abstützeinrichtungen an einem Lünettengrundkörper aufweisen, zeichnet sich die hierin beschriebene Lünette sonach durch eine bewegbar gelagerte Anordnung bzw. Ausbildung wenigstens einer Abstützeinrichtung an dem Lünettengrundkörper aus. Typischerweise sind alle Abstützeinrichtungen der Lünette in wenigstens einem eine Bewegungsbahn definierenden Bewegungsfreiheitsgrad bewegbar gelagert relativ zu dem Lünettengrundkörper an dem Lünettengrundkörper angeordnet bzw. ausgebildet. Eine jeweilige entsprechend bewegbar gelagert relativ zu dem Lünettengrundkörper an dem Lünettengrundkörper angeordnete bzw. ausgebildete Abstützeinrichtung ist typischerweise zwischen wenigstens zwei definierten Positionen bzw. Stellungen bewegbar gelagert; die Bewegungsbahn entlang welcher die Abstützeinrichtung bewegbar gelagert ist, erstreckt sich damit wenigstens zwischen den zwei definierten Stellungen. Wie sich im Weiteren ergibt, kann es sich bei einer ersten Stellung um eine Betriebsstellung der jeweiligen Abstützeinrichtung, in welcher eine Abstützung eines abzustützenden Werkstücks vermittels der Abstützeinrichtung möglich ist, und einer Nichtbetriebsstellung, in welcher eine Abstützung eines abzustützenden Werkstücks vermittels der Abstützeinrichtung nicht möglich ist, handeln.

Durch die relativ zu dem Lünettengrundkörper bewegbar gelagerte Anordnung bzw. Ausbildung der wenigstens einen Abstützeinrichtung an dem Lünettengrundkörper ist eine Möglichkeit einer einfachen flexiblen Abstützung, insbesondere querschnittlich, (deutlich) unterschiedlich dimensionierter, vermittels der Lünette abzustützender Werkstücke, geschaffen. Es liegt damit eine verbesserte Lünette zur Abstützung eines mechanisch zu bearbeitenden Werkstücks vor.

Der wenigstens eine Bewegungsfreiheitsgrad ist typischerweise ein translatorischer, insbesondere linearer, Bewegungsfreiheitsgrad. Die durch den wenigstens einen Bewegungsfreiheitsgrad definierte Bewegungsbahn ist damit typischerweise eine translatorische, insbesondere lineare, Bewegungsbahn. Selbstverständlich sind grundsätzlich andere Bewegungsfreiheitsgrade, d. h. insbesondere auch aus unterschiedlichen Bewegungsfreiheitsgraden kombinierte Bewegungsfreiheitsgrade, sowie entsprechend andere Bewegungsbahnen denkbar.

Die zwei Abstützeinrichtungen können abhängig oder unabhängig voneinander jeweils in wenigstens einem eine Bewegungsbahn definierenden Bewegungsfreiheitsgrad bewegbar gelagert relativ zu dem Lünettengrundkörper an dem Lünettengrundkörper angeordnet bzw. ausgebildet sein. Eine abhängige bewegbare Lagerung der Abstützeinrichtungen bedeutet, dass eine durch eine Bewegung einer ersten Abstützeinrichtung bedingte Änderung der Position der ersten Abstützeinrichtung (zwingend) mit einer Bewegung einer zweiten Abstützeinrichtung und somit einer Änderung der Position einer zweiten Abstützeinrichtung einhergeht. Die Bewegungen der Abstützeinrichtungen sind dabei typischerweise ungleich gerichtet, d. h. die Abstützeinrichtungen werden aufeinander zu oder voneinander wegbewegt. Eine unabhängige Lagerung der Abstützeinrichtungen bedeutet entsprechend, dass eine durch eine Bewegung einer ersten Abstützeinrichtung bedingte Änderung der Position der ersten Abstützeinrichtung nicht (zwingend) mit einer Bewegung einer zweiten Abstützeinrichtung und somit einer Änderung der Position einer zweiten Abstützeinrichtung einhergeht.

Der Lünettengrundkörper kann zwei winklig relativ zueinander ausgerichtete, insbesondere rampenartige, Führungsabschnitte umfassen. Die Führungsabschnitte sind (in einer Frontansicht der Lünette) typischerweise einander gegenüber liegend angeordnet bzw. ausgebildet. Die Führungsabschnitte können V-artig bzw. - förmig angeordnet sein, wobei die Führungsabschnitte die Schenkel des Vs bilden; hieraus ergibt sich, dass die Führungsabschnitte geradlinig (mit einer konstanten Steigung bezüglich einer, z. B. horizontalen, Referenzebene) verlaufen im Bereich ihrer jeweiligen Enden in einen durch ihre jeweiligen Enden gebildeten First (Schnittkante) übergehen können. Der Winkel zwischen den zumindest abschnittsweise freiliegenden Oberflächen bzw. -seiten der Führungsabschnitte ist damit typischerweise größer als 180°, woraus sich die winklige Ausrichtung bzw. ein bezüglich einer, z. B. horizontalen, Referenzachse geneigter Verlauf jeweiliger Führungsabschnitte ergibt. Selbstverständlich ist es prinzipiell auch möglich, dass die Führungsabschnitte nicht geradlinig, sondern z. B. zumindest abschnittsweise (konvex oder konkav) gewölbt verlaufen.

Sofern der Lünettengrundkörper entsprechende Führungsabschnitte aufweist, sind jeweilige Abstützeinrichtungen typischerweise in dem wenigstens einen Bewegungsfreiheitsgrad bewegbar gelagert relativ zu einem jeweiligen Führungsabschnitt an einem Führungsabschnitt angeordnet bzw. ausgebildet. Eine erste bewegbar gelagerte Abstützeinrichtung ist relativ zu einem ersten Führungsabschnitt bewegbar gelagert, d. h. einem ersten Führungsabschnitt zugeordnet, eine zweite bewegbar gelagerte Abstützeinrichtung ist relativ zu einem zweiten Führungsabschnitt bewegbar gelagert, d. h. einem zweiten Führungsabschnitt zugeordnet. Jeweilige Abstützeinrichtung sitzen typischerweise unmittelbar auf jeweiligen Führungsabschnitten auf.

Ein jeweiliger Führungsabschnitt kann länglich ausgebildet sein und somit eine Längsachse aufweisen. Eine diesem zugeordnete Abstützeinrichtung kann entsprechend in einer sich, insbesondere parallel, entlang der Längsachse des Führungsabschnitts erstreckenden Bewegungsbahn bewegbar gelagert relativ zu dem Führungsabschnitt an diesem angeordnet bzw. ausgebildet sein. Die Längsachse eines jeweiligen Führungsabschnitts kann damit gleichermaßen die Bewegungsbahn, entlang welcher eine jeweilige Abstützeinrichtung relativ zu dem Führungsabschnitt bewegbar gelagert an diesem angeordnet oder ausgebildet ist, definieren, was eine definierte Bewegung einer jeweiligen Abstützeinrichtung relativ zu einem jeweiligen Führungsabschnitt ermöglicht.

Wie sich im Folgenden ergibt, kann ein entsprechender Führungsabschnitt einen Teil einer Führungseinrichtung, welche zur Führung einer Bewegung einer Abstützeinrichtung in der wenigstens einen durch den wenigstens einen Bewegungsfreiheitsgrad definierten Bewegungsbahn eingerichtet ist, bilden.

Zur Ausbildung einer entsprechenden Führungseinrichtung kann ein entsprechender lünettengrundkörperseitiger Führungsabschnitt mit einem abstützeinrichtungsseitig angeordneten bzw. ausgebildeten Führungselement zusammenwirken. Die Führungseinrichtung kann damit wenigstens ein lünettengrundkörperseitig, insbesondere führungsabschnittseitig, angeordnetes bzw. ausgebildetes erstes Führungselement und wenigstens ein mit diesem zusammenwirkendes abstützeinrichtungsseitig angeordnetes bzw. ausgebildetes zweites Führungselement umfassen.

Bei einem lünettengrundkörperseitig angeordneten bzw. ausgebildeten ersten Führungselement kann es sich z. B. um eine, z. B. querschnittlich T-förmig ausgebildete, Führungsfläche bzw. -geometrie, bei einem abstützeinrichtungsseitig angeordneten bzw. ausgebildeten zweiten Führungselement kann es sich z. B. um eine eine entsprechende Führungsfläche bzw. -geometrie zumindest abschnittsweise über- oder umgreifende Gegenführungsfläche bzw. -geometrie handeln. Selbstverständlich ist eine umgekehrte Konfiguration jeweiliger erster und zweiter Führungselemente denkbar. Alternativ oder ergänzend kann es sich bei einem lünettengrundkörperseitig angeordneten bzw. ausgebildeten ersten Führungselement z. B. um eine, z. B. schwalbenschanzförmige, Führungsausnehmung bzw. -geometrie, und bei einem abstützeinrichtungsseitig angeordneten bzw. ausgebildeten zweiten Führungselement z. B. um ein in der Führungsausnehmung aufnehmbares bzw. aufgenommenes, z. B. kufen-, schlitten- oder rollenartig, mithin z. B. als Gleit- oder Rollenelement ausgebildetes, Führungselement handeln. Selbstverständlich ist auch hier eine umgekehrte Konfiguration jeweiliger erster und zweiter Führungselemente denkbar.

Die Führungseinrichtung kann in allen Ausführungsformen gleichermaßen eine unverlierbare Anordnung einer jeweiligen Abstützeinrichtung an dem Lünettengrundkörper sicherstellen; mithin kann die Führungseinrichtung neben der Führungsfunktion auch eine Sicherungsfunktion jeweiliger Abstützeinrichtungen an dem Lünettengrundkörper ausüben.

Wie erwähnt, kann eine jeweilige bewegbar gelagerte Abstützeinrichtung insbesondere zwischen einer Betriebsstellung, in welcher eine Abstützung eines abzustützenden Werkstücks erfolgt/möglich ist, und einer Nichtbetriebsstellung, in welcher eine Abstützung eines abzustützenden Werkstücks nicht erfolgt/möglich ist, bewegbar gelagert an dem Lünettengrundkörper angeordnet bzw. ausgebildet sein. Die Abstützeinrichtung ist in der Betriebsstellung typischerweise gegen das abzustützende Werkstück bewegt, insbesondere gegen das abzustützende Werkstück verklemmt bzw. verspannt, d. h. es besteht ein mechanischer Kontakt zwischen dem jeweiligen Abstützelement der Abstützeinrichtung und dem abzustützenden bzw. abgestützten Werkstück. Das Werkstück ist damit durch die Abstützeinrichtung sicher, d. h. insbesondere lage- bzw. ortsfest, abgestützt und kann mechanisch bearbeiten werden.

In der Betriebsstellung einer jeweiligen Abstützeinrichtung, gegebenenfalls in der Betriebsstellung jeweiliger entsprechend bewegbar gelagerter Abstützeinrichtungen, kann eine Passagemöglichkeit für ein Bearbeitungswerkzeug einer Vorrichtung zur mechanischen Bearbeitung eines mechanisch zu bearbeitenden Werkstücks geschaffen sein, sodass ein Bearbeitungswerkzeug, d. h. z. B. ein Fräswerkzeug, insbesondere entlang der Längsachse eines vermittels der Lünette abgestützten, mechanisch zu bearbeitenden Werkstücks, über die Passagemöglichkeit in Richtung der Längsachse des mechanisch zu bearbeitenden Werkstücks die Lünette passieren kann. Die Lünette kann mithin so ausgelegt sein, dass diese ein durchgängiges mechanisches Bearbeiten des vermittels dieser abgestützten Werkstücks nicht verhindert, da ohne Unterbrechung eines mechanischen Bearbeitungsvorgangs eine Passagemöglichkeit für ein entsprechendes Bearbeitungswerkzeug über die Lünette hinweg möglich ist.

Wie erwähnt, kann die Lünette zwei abhängig voneinander jeweils in wenigstens einem eine Bewegungsbahn definierenden Bewegungsfreiheitsgrad bewegbar gelagerte Abstützeinrichtungen umfassen. Mithin sind synchrone bzw. synchronisierte Bewegungen der Abstützeinrichtungen, z. B. von jeweiligen Betriebs- in jeweilige Nichtbetriebsstellungen und umgekehrt, grundsätzlich möglich. Eine abhängige bewegbare Lagerung der Abstützeinrichtungen kann beispielsweise durch eine Bewegungskopplung der Abstützeinrichtungen realisiert sein. Sofern die Lünette zwei abhängig voneinander bewegbar gelagerte Abstützeinrichtungen umfasst, können diese sonach (miteinander) bewegungsgekoppelt sein. Eine Bewegungskopplung der Abstützeinrichtungen ermöglicht synchrone bzw. synchronisierte Bewegungen der Abstützeinrichtungen z. B. von jeweiligen Betriebs- in jeweilige Nichtbetriebsstellungen und umgekehrt.

Eine Bewegungskopplung der Abstützeinrichtungen kann über eine zwischen die Abstützeinrichtungen geschaltet angeordnete Kopplungseinrichtung realisiert sein. Die Kopplungseinrichtung kann über einen ersten Kopplungsabschnitt mit einer ersten Abstützeinrichtung und über einen zweiten Kopplungsabschnitt mit einer zweiten Abstützeinrichtung gekoppelt sein. Die Kopplungseinrichtung umfasst wenigstens ein Kopplungselement. Das Kopplungselement kann über einen ersten Kopplungselementabschnitt mit einer ersten Abstützeinrichtung und über einen zweiten Kopplungselementabschnitt mit einer zweiten Abstützeinrichtung gekoppelt sein. Bei der Kopplungseinrichtung kann es sich um eine Stellzylindereinrichtung, bei dem Kopplungselement kann es sich entsprechend um einen, insbesondere hydraulischen Stellzylinder handeln. Die Kopplungseinrichtung bzw. das Kopplungselement kann einen Bestandteil einer Antriebseinrichtung, welche zur Erzeugung einer die wenigstens eine Abstützeinrichtung in eine Bewegung in dem wenigstens einen Bewegungsfreiheitsgrad versetzenden Antriebskraft eingerichtet ist, bilden.

Die Lünette kann sonach wenigstens eine Antriebseinrichtung, welche zur Erzeugung einer die wenigstens eine, gegebenenfalls beide, Abstützeinrichtung(en) in eine Bewegung in dem wenigstens einen Bewegungsfreiheitsgrad versetzenden Antriebskraft eingerichtet ist, umfassen. Die Antriebseinrichtung kann unmittelbar oder mittelbar, d. h. unter Zwischenschaltung wenigstens einer Kraft übertragenden Baugruppe, d. h. z. B. einer entsprechenden Kopplungseinrichtung, mit einer jeweiligen in eine Bewegung zu versetzenden Abstützeinrichtung gekoppelt sein. Konkret kann die Antriebseinrichtung auf die Kopplungseinrichtung wirken, um ein Aus- oder Einfahren des Kopplungselements zu bewirken, was aufgrund der Kopplung des Kopplungselements mit der oder den Abstützeinrichtung(en) zu einer Bewegung der Abstützeinrichtung(en) relativ zu dem Lünettengrundkörper führt. Die Wirkrichtung der seitens der Antriebseinrichtung erzeugbaren bzw. erzeugten Antriebskraft kann der Bewegungsrichtung der jeweiligen Abstützeinrichtung entsprechen. Die Antriebseinrichtung kann z. B. elektrisch, hydraulisch, oder mechanisch wirken, mithin kann die Antriebseinrichtung z. B. als elektrische und/oder hydraulische und/oder mechanische Antriebseinrichtung ausgebildet sein bzw. wenigstens eine solche umfassen.

Die Lünette kann wenigstens eine Spanschutzeinrichtung, welche eingerichtet ist, die Ablagerung von bei der, insbesondere spanenden, Bearbeitung des Werkstücks entstehendem Abtragsmaterial, d. h. insbesondere Spänen, vor der Ablagerung an funktionsrelevanten Abschnitten der Lünette zu verhindern, umfassen. Die Spanschutzeinrichtung kann mehrere, insbesondere plattenartige bzw. -förmige, Spanschutzelemente umfassen, welche an unterschiedlichen Abschnitten der Lünette angeordnet oder ausgebildet sein können. Wenigstens ein erstes Spanschutzelement kann z. B. im Bereich der Führungsabschnitte angeordnet oder ausgebildet sein, um hier eine Ablagerung von Abtragsmaterial zu verhindern, wenigstens eine zweites Spanschutzelement kann z. B. im Bereich der Abstützeinrichtungen, d. h. insbesondere an den in Bearbeitungsrichtung weisenden Abschnitten der Abstützeinrichtungen, angeordnet oder ausgebildet sein, um hier eine eine Ablagerung von Abtragsmaterial zu verhindern.

Die Lünette kann ferner wenigstens eine, insbesondere abstützeinrichtungsseitig angeordnete oder ausgebildete Abstreifeinrichtung, z. B. in Form von Borsten oder Bürsten, umfassen, welche eingerichtet ist, insbesondere durch entsprechende Bewegung der Abstützeinrichtungen, ein Abstreifen bzw. Entfernen von gegebenenfalls auf den Führungsabschnitten angelagertem Abtragsmaterial von den Führungsabschnitten ermöglichen. Die Abstreifeinrichtungen können z. B. im Bereich jeweiliger abstützeinrichtungsseitig angeordneter bzw. ausgebildeter zweiter Führungselemente, bei welchen es sich, wie erwähnt, z. B. um eine eine entsprechende Führungsfläche bzw. - geometrie zumindest abschnittsweise über- oder umgreifende Gegenführungsfläche bzw. -geometrie handeln kann, angeordnet oder ausgebildet sein.

Um eine zeitweise Sperrung einer (weiteren) Bewegung einer bewegbar gelagerten Abstützeinrichtung zu ermöglichen, kann die Lünette wenigstens eine Sperreinrichtung, welche zur Sperrung einer Bewegung der wenigstens einen Abstützeinrichtung, insbesondere zur Sperrung einer in eine Betriebs- oder Nichtbetriebsstellung bewegten Abstützeinrichtung in der Betriebs- oder Nichtbetriebsstellung, eingerichtet ist, umfassen. Die Sperreinrichtung kann z. B. magnetisch und/oder mechanisch wirken; mithin kann die Sperreinrichtung wenigstens ein z. B. magnetisch und/oder mechanisch wirkendes Sperrelement, d. h. z. B. einen Sperrmagneten oder einen Sperrbolzen, umfassen.

Bei der Vorrichtung kann es sich z. B. um ein Dreh- oder Fräszentrum handeln. Die Vorrichtung zeichnet sich dadurch aus, dass sie wenigstens eine wie beschriebene Lünette umfasst. Sämtliche Ausführungen im Zusammenhang mit der Lünette gelten damit analog für die Vorrichtung.

Die Erfindung ist anhand eines Ausführungsbeispiels in den Zeichnungen erläutert. Dabei zeigt:
- Fig. 1, 2: je eine Prinzipdarstellung einer Lünette gemäß einem Ausführungsbeispiel in einer Betriebsstellung;
- Fig. 3, 4: je eine Prinzipdarstellung einer Lünette gemäß einem Ausführungsbeispiel in einer Nichtbetriebsstellung; und
- Fig. 5,: 6 je eine Prinzipdarstellung einer Lünette gemäß einem weiteren Ausführungsbeispiel in einer Betriebsstellung.

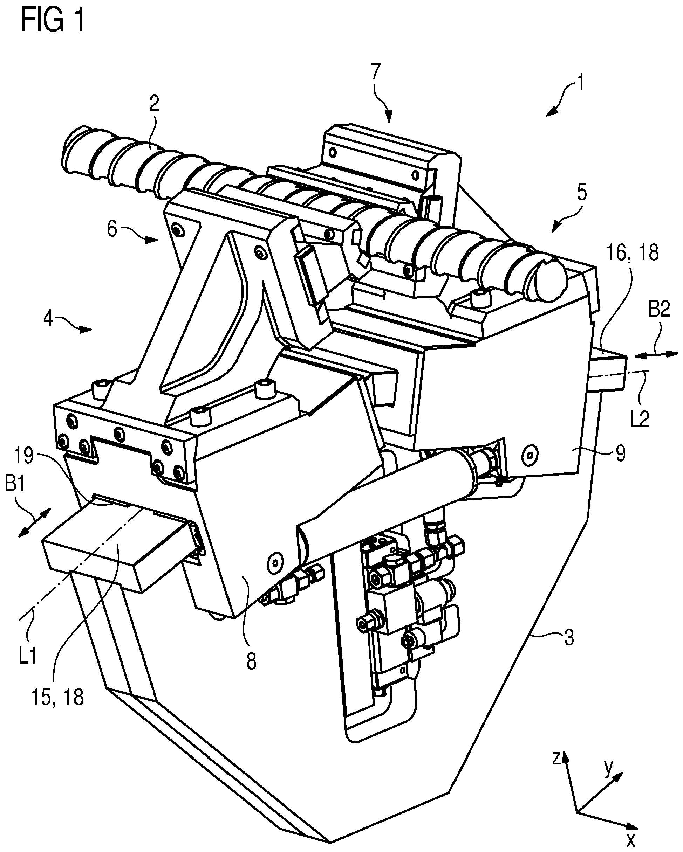

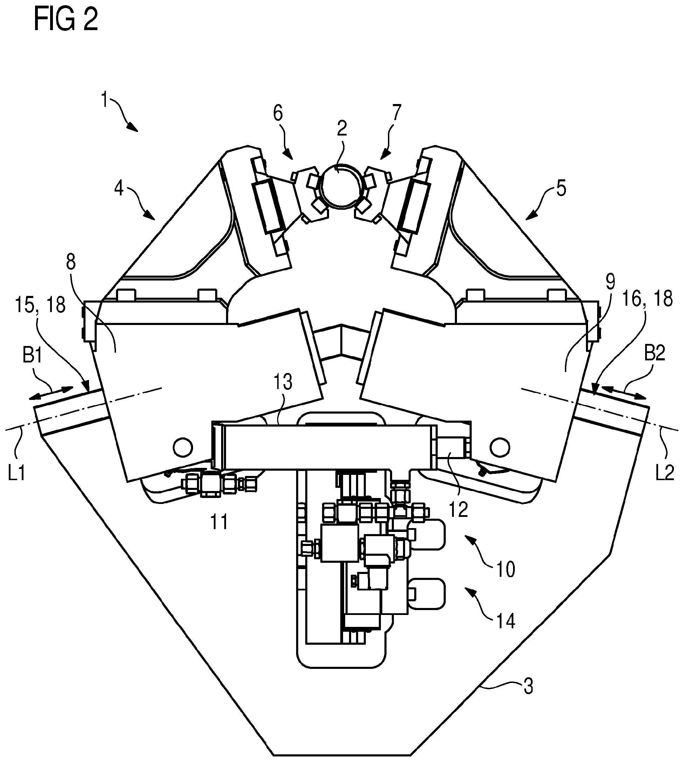

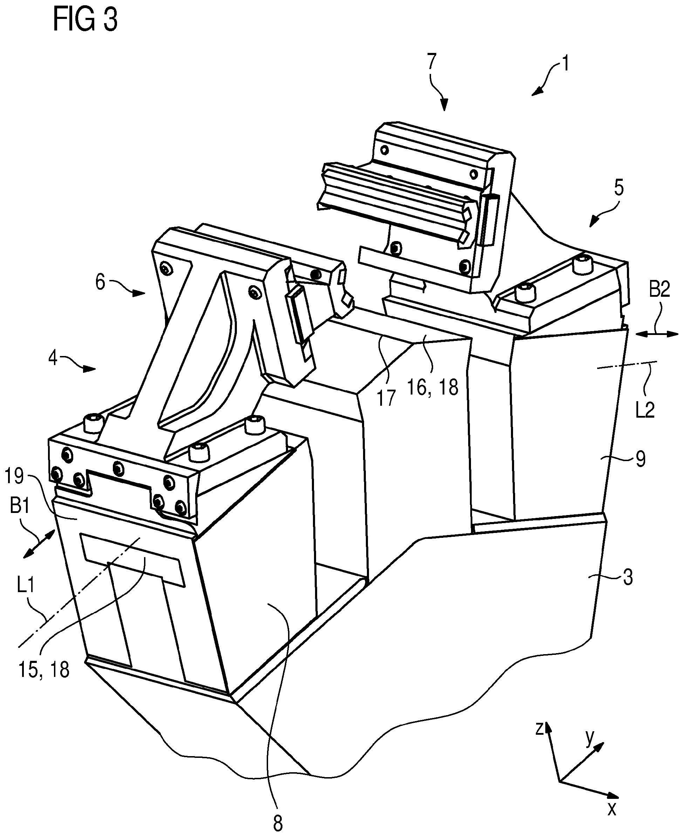

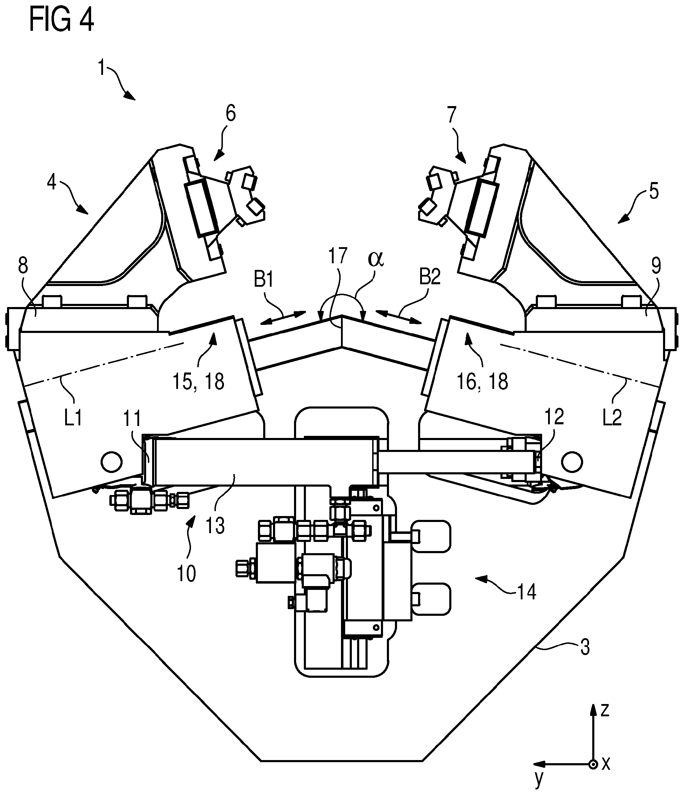

Die Fig. 1 - 4 zeigen jeweils Prinzipdarstellungen einer Lünette 1 gemäß einem Ausführungsbeispiel. Die Lünette 1 ist in den Fig. 1, 2 in einer Betriebsstellung dargestellt, wobei Fig. 1 eine perspektivische Ansicht der Lünette 1 und Fig. 2 eine Frontansicht der Lünette 1 zeigt, und in den Fig. 3, 4 in einer Nichtbetriebsstellung dargestellt, wobei Fig. 3 eine perspektivische Ansicht der Lünette 1 und Fig. 4 eine Frontansicht der Lünette 1 zeigt.

Die Lünette 1 dient zur Abstützung bzw. Lagerung eines mechanisch, d. h. insbesondere spanend, zu bearbeitenden, insbesondere länglichen, Werkstücks 2 (vgl. Fig. 1, 2). Bei dem Werkstück 2 kann es sich, wie in Fig. 1, 2 gezeigt, beispielsweise um eine Welle handeln.

Die Lünette 1 umfasst einen in einer Vorrichtung (nicht gezeigt) zur mechanischen, insbesondere spanenden, Bearbeitung eines mechanisch zu bearbeitenden Werkstücks 2 anordenbaren Lünettengrundkörper 3. Bei dem Lünettengrundkörper 3 handelt es sich um denjenigen Bestandteil der Lünette 1, über welchen diese in einer Vorrichtung zur mechanischen Bearbeitung eines mechanisch zu bearbeitenden Werkstücks 2, d. h. z. B. einem Dreh- oder Fräszentrum, anordenbar ist; hierfür wird der Lünettengrundkörper 3 in einem hierfür vorgesehenen Aufnahmebereich, typischerweise dem Maschinenbett, einer entsprechenden Vorrichtung aufgenommen. Der Lünettengrundkörper 3 kann unmittelbar oder mittelbar unter Zwischenschaltung eines Lünettenträgers (nicht gezeigt) in einem hierfür vorgesehenen Aufnahmebereich einer entsprechenden Vorrichtung aufgenommen sein.

Die Aufnahme des Lünettengrundkörpers 3 in dem hierfür vorgesehenen vorrichtungsseitigen Aufnahmebereich kann ein Zusammenwirken geeigneter lünettengrundkörperseitiger bzw. lünettenträgerseitiger und aufnahmebereichsseitiger, insbesondere mechanischer, Schnittstellen beinhalten. Die Aufnahme des Lünettengrundkörpers 3 in dem hierfür vorgesehenen vorrichtungsseitigen Aufnahmebereich kann ferner eine bewegbare Lagerung des Lünettengrundkörpers 3 bzw. der Lünette 1 (jeweils gegebenenfalls nebst Lünettenträger) relativ zu der Vorrichtung beinhalten.

An dem Lünettengrundkörper 3 sind zwei zur Abstützung bzw. Lagerung eines mechanisch zu bearbeitenden Werkstücks 2 eingerichtete Abstützeinrichtungen 4, 5 angeordnet. Die Abstützeinrichtungen 4, 5 umfassen jeweils ein das abzustützende Werkstück 2 abstützendes Abstützelement 6, 7. Ersichtlich sind die Abstützelemente 6, 7 an einem an dem Lünettengrundkörper 3 angeordneten Grundkörper 8, 9 der Abstützeinrichtungen 4, 5, angeordnet bzw. ausgebildet. Bei den Abstützeinrichtungen 4, 5 handelt es sich in dem in den Fig. gezeigten Ausführungsbeispiel um Klemm- oder Spanneinrichtungen, d. h. z. B. um Klemm- bzw. Spannbackeneinrichtungen, bei den Abstützelementen 6, 7 handelt es sich in dem Ausführungsbeispiel entsprechend um Klemm- oder Spannelemente, d. h. z. B. um Klemm- bzw. Spannbacken.

Die Abstützeinrichtungen 4, 5 sind in einem eine Bewegungsbahn B1, B2 definierenden Bewegungsfreiheitsgrad bewegbar, d. h. in dem in den Fig. gezeigten Ausführungsbeispiel verschiebbar, gelagert relativ zu dem Lünettengrundkörper 3 an dem Lünettengrundkörper 3 angeordnet bzw. ausgebildet. Die in den Fig. linke Abstützeinrichtung 4 ist entlang der durch den Doppelpfeil B1 angedeuteten Bewegungsbahn bewegbar gelagert, die in den Fig. rechte Abstützeinrichtung 5 ist entlang der durch den Doppelpfeil B2 angedeuteten Bewegungsbahn bewegbar gelagert.

Die Lünette 1 zeichnet sich sonach durch eine bewegbar gelagerte Anordnung bzw. Ausbildung ihrer Abstützeinrichtungen 4, 5 an dem Lünettengrundkörper 3 aus. Wenngleich in dem in den Fig. gezeigten Ausführungsbeispiel beide Abstützeinrichtungen 4, 5 relativ zu dem Lünettengrundkörper 3 bewegbar gelagert an dem Lünettengrundkörper 3 angeordnet sind, ist es prinzipiell auch denkbar, dass nur eine Abstützeinrichtung 4, 5 relativ zu dem Lünettengrundkörper 3 bewegbar gelagert an dem Lünettengrundkörper 3 angeordnet bzw. ausgebildet ist.

Der Bewegungsfreiheitsgrad ist in dem in den Fig. gezeigten Ausführungsbeispiel jeweils ein translatorischer, insbesondere linearer, Bewegungsfreiheitsgrad. Die durch den jeweiligen Bewegungsfreiheitsgrad jeweils definierte Bewegungsbahn B1, B2 ist damit in dem in den Fig. gezeigten Ausführungsbeispiel eine translatorische, insbesondere lineare, Bewegungsbahn.

Anhand einer Gegenüberstellung der Fig. 1, 2 und der Fig. 3, 4 ist ersichtlich, dass die Abstützeinrichtungen 4, 5 zwischen wenigstens zwei definierten Positionen bzw. Stellungen, nämlich einer in den Fig. 1, 2 gezeigten Betriebsstellung, in welcher eine Abstützung des abzustützenden Werkstücks 2 vermittels der Abstützeinrichtungen 4, 5 möglich ist, und einer in den Fig. 3, 4 gezeigten Nichtbetriebsstellung, in welcher eine Abstützung des abzustützenden Werkstücks 2 vermittels der Abstützeinrichtungen 4, 5 nicht möglich ist, bewegbar gelagert sind. Die Bewegungsbahnen B1, B2, entlang welchen die Abstützeinrichtungen 4, 5 bewegbar gelagert sind, erstrecken sich damit zwischen den zwei definierten Stellungen. Die Abstützeinrichtungen 4, 5 sind in der Betriebsstellung gegen das abzustützende Werkstück 2 bewegt, insbesondere gegen das abzustützende Werkstück 2 verklemmt bzw. verspannt, d. h. es besteht ein mechanischer Kontakt zwischen dem jeweiligen Abstützelement 6, 7 und dem abzustützenden bzw. abgestützten Werkstück 2 (vgl. Fig. 1, 2). Das Werkstück 2 ist damit durch die Abstützeinrichtungen 4, 5 sicher, d. h. insbesondere lage- bzw. ortsfest, abgestützt und kann mechanisch bearbeiten werden.

Durch die relativ zu dem Lünettengrundkörper 3 bewegbar gelagerte Anordnung bzw. Ausbildung der Abstützeinrichtungen 4, 5 an dem Lünettengrundkörper 3 ist eine Möglichkeit einer einfachen flexiblen Abstützung, insbesondere querschnittlich, (deutlich) unterschiedlich dimensionierter, vermittels der Lünette 1 abzustützender Werkstücke 2, geschaffen.

Die Abstützeinrichtungen 4, 5 können abhängig oder unabhängig voneinander jeweils in einer jeweiligen Bewegungsbahn B1, B2 relativ zu dem Lünettengrundkörper 3 bewegbar gelagert an dem Lünettengrundkörper 3 angeordnet sein. Eine wie in dem in den Fig. gezeigten Ausführungsbeispiel gezeigte abhängige bewegbare Lagerung der Abstützeinrichtungen 4, 5 bedeutet, dass eine durch eine Bewegung einer ersten Abstützeinrichtung 4, 5 bedingte Änderung der Position der ersten Abstützeinrichtung 4, 5 (zwingend) mit einer Bewegung einer zweiten Abstützeinrichtung 4, 5 und somit einer Änderung der Position einer zweiten Abstützeinrichtung 4, 5 einhergeht. Die Bewegungen der Abstützeinrichtungen 4, 5 sind dabei typischerweise ungleich gerichtet, d. h. die Abstützeinrichtungen 4, 5 werden aufeinander zu oder voneinander wegbewegt.

Die abhängige bewegbare Lagerung der Abstützeinrichtungen 4, 5 ist durch eine Bewegungskopplung der Abstützeinrichtungen 4, 5, welche synchrone bzw. synchronisierte Bewegungen der Abstützeinrichtungen 4, 5 z. B. von jeweiligen Betriebs- in jeweilige Nichtbetriebsstellungen und umgekehrt, ermöglicht, realisiert; die Abstützeinrichtungen 4, 5 sind sonach bewegungsgekoppelt.

Die Bewegungskopplung der Abstützeinrichtungen 4, 5 ist über eine zwischen die Abstützeinrichtungen 4, 5 geschaltet angeordnete Kopplungseinrichtung 10 realisiert. Die Kopplungseinrichtung 10 ist über einen ersten Kopplungsabschnitt bzw. ein erstes Kopplungsmittel 11, z. B. in Form eines Bolzens, mit einer ersten Abstützeinrichtung 4 und über einen zweiten Kopplungsabschnitt bzw. ein zweites Kopplungsmittel 12, z. B. in Form eines Bolzens, mit einer zweiten Abstützeinrichtung 5 gekoppelt. Die Kopplungseinrichtung 10 umfasst wenigstens ein Kopplungselement 13 in Form eines, z. B. hydraulischen, Stellzylinders. Das Kopplungselement 13 ist über einen ersten Kopplungselementabschnitt bzw. das erste Kopplungsmittel 11 mit der ersten Abstützeinrichtung 4 und über einen zweiten Kopplungselementabschnitt bzw. das zweite Kopplungsmittel 12 mit der zweiten Abstützeinrichtung 5 gekoppelt. Bei der Kopplungseinrichtung 10 kann es sich demnach um eine Stellzylindereinrichtung handeln.

Die Kopplungseinrichtung 10 kann einen Bestandteil einer Antriebseinrichtung 14, welche zur Erzeugung einer die Abstützeinrichtungen 4, 5 in eine Bewegung in einem jeweiligen Bewegungsfreiheitsgrad versetzenden Antriebskraft eingerichtet ist, bilden.

Die Lünette 1 umfasst sonach eine Antriebseinrichtung 14, welche zur Erzeugung einer die Abstützeinrichtungen 4, 5 in eine Bewegung in einem jeweiligen Bewegungsfreiheitsgrad versetzenden Antriebskraft eingerichtet ist. Die Antriebseinrichtung 14 ist in dem in den Fig. gezeigten Ausführungsbeispiel mittelbar, d. h. unter Zwischenschaltung einer Kraft übertragenden Baugruppe, d. h. der Kopplungseinrichtung 10, mit den in Bewegung zu versetzenden Abstützeinrichtungen 4, 5 gekoppelt. Konkret wirkt die Antriebseinrichtung 14 auf die Kopplungseinrichtung 10, um ein Aus- oder Einfahren des Kopplungselements 13 zu bewirken, was aufgrund der Kopplung des Kopplungselements 13 mit den Abstützeinrichtungen 4, 5 zu einer Bewegung der Abstützeinrichtungen 4, 5 relativ zu dem Lünettengrundkörper 3 führt.

Die Antriebseinrichtung 14 kann z. B. elektrisch, hydraulisch, oder mechanisch wirken. In dem in den Fig. gezeigten Ausführungsbeispiel ist die Antriebseinrichtung 14 als elektrische bzw. hydraulische Antriebseinrichtung, d. h. als elektrohydraulische Aktoreinrichtung, ausgebildet.

Der Lünettengrundkörper 3 umfasst ersichtlich zwei geradlinig (mit einer konstanten Steigung bezüglich einer, z. B. horizontalen, Referenzebene) verlaufende, winklig relativ zueinander ausgerichtete rampenartige Führungsabschnitte 15, 16. Die Führungsabschnitte 15, 16 sind (in einer Frontansicht der Lünette) einander gegenüber liegend angeordnet bzw. ausgebildet, sodass sich eine V-artige bzw. -förmige Anordnung der Führungsabschnitte 15, 16 ergibt; die Führungsabschnitte 15, 16 bilden die Schenkel des Vs, welche in einen durch ihre jeweiligen Enden gebildeten First 17 (Schnittkante) übergehen. Der Winkel α zwischen den freiliegenden Oberflächen bzw. -seiten der Führungsabschnitte 15, 16 ist damit größer als 180°.

Die Abstützeinrichtungen 4, 5 sind in dem jeweiligen Bewegungsfreiheitsgrad bewegbar gelagert relativ zu einem jeweiligen Führungsabschnitt 15, 16 an einem Führungsabschnitt 15, 16 angeordnet bzw. ausgebildet. Eine erste Abstützeinrichtung 4 ist relativ zu einem ersten Führungsabschnitt 15 bewegbar gelagert, d. h. dem ersten Führungsabschnitt 15 zugeordnet, eine zweite Abstützeinrichtung 5 ist relativ zu einem zweiten Führungsabschnitt 16 bewegbar gelagert, d. h. dem zweiten Führungsabschnitt 16 zugeordnet. Die Abstützeinrichtungen 4, 5 sitzen unmittelbar auf jeweiligen Führungsabschnitten 15, 16 auf.

Die Führungsabschnitte 15, 16 sind jeweils länglich ausgebildet und weisen somit eine Längsachse L1, L2 auf. Eine jeweils zugeordnete Abstützeinrichtung 4, 5 ist entsprechend in einer sich parallel entlang der Längsachse L1, L2 des jeweiligen Führungsabschnitts 15, 16 erstreckenden Bewegungsbahn B1, B2 bewegbar gelagert relativ zu dem jeweiligen Führungsabschnitt 15, 16 an diesem angeordnet bzw. ausgebildet. Die Längsachse L1, L2 eines jeweiligen Führungsabschnitts 15, 16 definiert damit gleichermaßen die Bewegungsbahn B1, B2, entlang welcher eine jeweilige Abstützeinrichtung 4, 5 relativ zu dem Führungsabschnitt 15, 16 bewegbar gelagert an diesem angeordnet bzw. ausgebildet ist.

Die Führungsabschnitte 15, 16 bilden einen Teil einer Führungseinrichtung, welche zur Führung einer Bewegung der Abstützeinrichtungen 4, 5 in der jeweiligen Bewegungsbahn B1, B2 eingerichtet ist. Zur Ausbildung der Führungseinrichtung wirken die Führungsabschnitte 15, 16 mit abstützeinrichtungsseitig angeordneten bzw. ausgebildeten Führungselementen 19 zusammen. Die Führungseinrichtung umfasst damit lünettengrundkörper- bzw. -führungsabschnittseitig angeordnete bzw. ausgebildete erste Führungselemente 18 und mit diesen zusammenwirkende abstützeinrichtungsseitig angeordnete bzw. ausgebildete zweite Führungselemente 19.

Bei den lünettengrundkörperseitig angeordneten bzw. ausgebildeten ersten Führungselementen 18 handelt es sich um eine, in dem in Fig. gezeigten Ausführungsbeispiel querschnittlich T-förmig ausgebildete Führungsfläche bzw. - geometrie, bei einem abstützeinrichtungsseitig angeordneten bzw. ausgebildeten zweiten Führungselement 19 handelt es sich in dem in den Fig. gezeigten Ausführungsbeispiel um eine eine entsprechende Führungsfläche bzw. - geometrie über- bzw. umgreifende Gegenführungsfläche bzw. -geometrie. Selbstverständlich ist eine umgekehrte Konfiguration jeweiliger erster und zweiter Führungselemente 18, 19 denkbar.

Die Führungseinrichtung stellt gleichermaßen eine unverlierbare Anordnung der Abstützeinrichtung 4, 5 an dem Lünettengrundkörper 3 sicher; mithin übt die Führungseinrichtung neben der Führungsfunktion auch eine Sicherungsfunktion jeweiliger Abstützeinrichtungen 4, 5 an dem Lünettengrundkörper 3 aus.

Ersichtlich ist in der in den Fig. 1, 2 gezeigten Betriebsstellung der Abstützeinrichtungen 4, 5 eine Passagemöglichkeit für ein Bearbeitungswerkzeug einer Vorrichtung zur mechanischen Bearbeitung des mechanisch zu bearbeitenden Werkstücks 2 geschaffen, sodass ein Bearbeitungswerkzeug, d. h. z. B. ein Fräswerkzeug, insbesondere entlang der Längsachse des vermittels der Lünette 1 abgestützten, mechanisch zu bearbeitenden Werkstücks 2 über die Passagemöglichkeit in Richtung der Längsachse des Werkstücks 2 die Lünette 3 passieren kann. Die Lünette 1 ist mithin so ausgelegt, dass diese ein durchgängiges mechanisches Bearbeiten des abgestützten Werkstücks 2 nicht verhindert, da ohne Unterbrechung eines mechanischen Bearbeitungsvorgangs eine Passage eines Bearbeitungswerkzeugs über die Lünette 1 hinweg möglich ist.

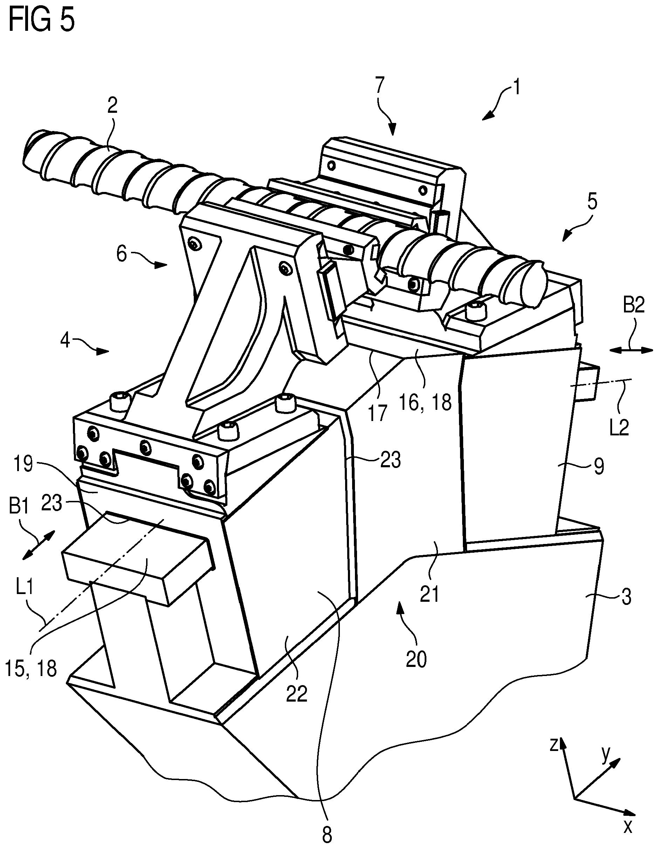

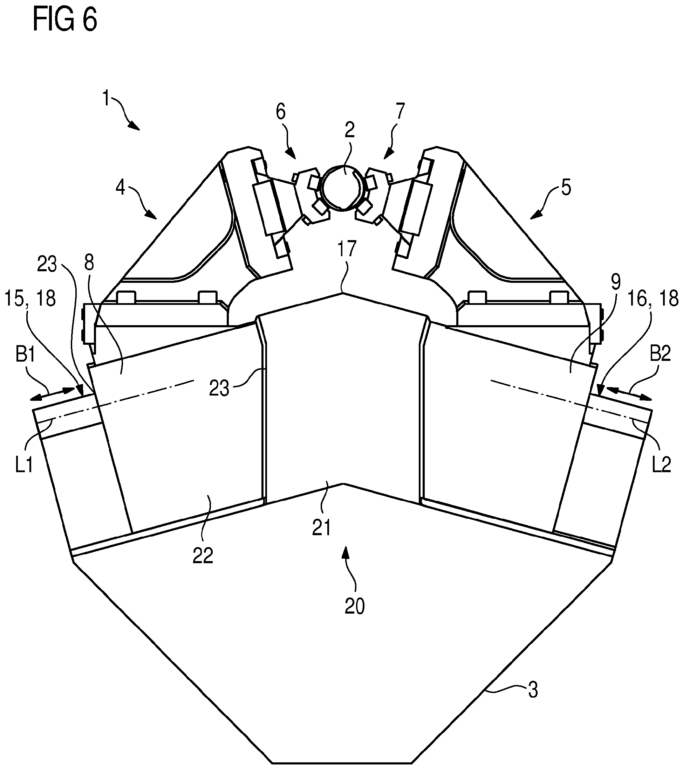

Die Fig. 5, 6 zeigen je eine Prinzipdarstellung einer Lünette 1 gemäß einem weiteren Ausführungsbeispiel in einer Betriebsstellung, wobei Fig. 5 eine perspektivische Ansicht der Lünette 1 und Fig. 6 eine Frontansicht der Lünette 1 zeigt.

Im Unterschied zu dem in den Fig. 1 - 4 gezeigten Ausführungsbeispiel umfasst die Lünette 1 hier zusätzlich eine grundsätzlich optionale Spanschutzeinrichtung 20, welche eingerichtet ist, die Ablagerung von bei der, insbesondere spanenden, Bearbeitung des Werkstücks 2 entstehendem Abtragsmaterial, d. h. insbesondere Spänen, vor der Ablagerung an funktionsrelevanten Abschnitten der Lünette 1 zu verhindern. Die Spanschutzeinrichtung 20 umfasst mehrere, insbesondere plattenartige bzw. -förmige, Spanschutzelemente 21, 22. Erste Spanschutzelemente 21 können z. B. im Bereich der Führungsabschnitte 15, 16 angeordnet oder ausgebildet sein, um hier eine Ablagerung von Abtragsmaterial zu verhindern, zweite Spanschutzelemente 22 können z. B. im Bereich der Abstützeinrichtungen 4, 5 angeordnet oder ausgebildet sein, um hier eine eine Ablagerung von Abtragsmaterial zu verhindern.

In Fig. 5 sind ferner abstützeinrichtungsseitige Abstreifeinrichtungen 23, z. B. in Form von Borsten oder Bürsten, dargestellt, welche, insbesondere durch entsprechende Bewegung der Abstützeinrichtungen 4, 5, ein Abstreifen bzw. Entfernen von gegebenenfalls auf den Führungsabschnitten 15, 16 angelagertem Abtragsmaterial von den Führungsabschnitten 15, 16 ermöglichen. Die Abstreifeinrichtungen 23 sind in dem Ausführungsbeispiel beispielhaft im Bereich jeweiliger abstützeinrichtungsseitig angeordneter bzw. ausgebildeter zweiter Führungselemente 19 angeordnet bzw. ausgebildet.

Wenngleich in den Fig. nicht gezeigt, kann, die Lünette 1, um eine zeitweise Sperrung einer (weiteren) Bewegung der Abstützeinrichtungen 4, 5 zu ermöglichen, eine Sperreinrichtung (nicht gezeigt), welche zur Sperrung einer Bewegung wenigstens einer Abstützeinrichtung 4, 5, insbesondere zur Sperrung einer in eine Betriebs- oder Nichtbetriebsstellung bewegten Abstützeinrichtung 4, 5 in der Betriebs- oder Nichtbetriebsstellung, eingerichtet ist, umfassen. Die Sperreinrichtung kann z. B. magnetisch und/oder mechanisch wirken; mithin kann die Sperreinrichtung wenigstens ein z. B. magnetisch und/oder mechanisch wirkendes Sperrelement, d. h. z. B. einen Sperrmagneten oder einen Sperrbolzen, umfassen.

## Patentansprüche

1. Vorrichtung zur spanenden Bearbeitung eines spanend zu bearbeitenden länglichen Werkstücks, umfassend ein Fräswerkzeug und eine Lünette (1) zur Abstützung eines spanend zu bearbeitenden länglichen Werkstücks (2), wobei die Lünette (1) umfasst:
einen in der Vorrichtung anordenbaren Lünettengrundkörper (3), zwei an dem Lünettengrundkörper (3) angeordnete oder ausgebildete, jeweils zur Abstützung eines spanend zu bearbeitenden Werkstücks (2) eingerichtete Abstützeinrichtungen (4, 5), welche jeweils wenigstens ein ein abzustützendes Werkstück (2) abstützendes Abstützelement (6, 7) umfassen, wobei die Abstützeinrichtungen (4, 5) jeweils eine Klemm- oder Spanneinrichtung sind oder eine solche umfassen und das wenigstens eine Abstützelement (6, 7) ein Klemm- oder Spannelement ist oder ein solches umfasst, wobei
die Abstützeinrichtungen (4, 5) jeweils in wenigstens einem eine Bewegungsbahn (B1, B2) definierenden Bewegungsfreiheitsgrad bewegbar gelagert relativ zu dem Lünettengrundkörper (3) an dem Lünettengrundkörper (3) angeordnet oder ausgebildet sind, wobei
die Abstützeinrichtungen (4, 5) jeweils zwischen einer Betriebsstellung, in welcher eine Abstützung eines abzustützenden Werkstücks (2) möglich ist, wobei die Abstützeinrichtungen (4, 5) gegen das abzustützende Werkstück (2) verklemmbar oder verspannbar sind, und einer Nichtbetriebsstellung, in welcher eine Abstützung eines abzustützenden Werkstücks (2) nicht möglich ist, bewegbar gelagert sind, wobei
in der Betriebsstellung der Abstützeinrichtungen (4, 5) eine Passagemöglichkeit für das Fräswerkzeug geschaffen ist, sodass das Fräswerkzeug entlang der Längsachse eines vermittels der Lünette (1) abgestützten, spanend zu bearbeitenden Werkstücks (2), über die Passagemöglichkeit in Richtung der Längsachse des Werkstücks (2) die Lünette (1) passieren kann.

2. Vorrichtung nach Anspruch 1, **dadurch gekennzeichnet, dass** der Lünettengrundkörper (3) zwei winklig relativ zueinander ausgerichtete, insbesondere rampenartige, Führungsabschnitte (15, 16) umfasst, wobei die Abstützeinrichtungen (4, 5) jeweils in wenigstens einem Bewegungsfreiheitsgrad bewegbar gelagert relativ zu einem Führungsabschnitt (15, 16) des Lünettengrundkörpers (3) an einem Führungsabschnitt (15, 16) des Lünettengrundkörpers (3) angeordnet oder ausgebildet ist.

3. Vorrichtung nach Anspruch 2, **dadurch gekennzeichnet, dass** ein jeweiliger Führungsabschnitt (15, 16) länglich ausgebildet ist, wobei die Abstützeinrichtung (4, 5) in einer sich, insbesondere parallel, entlang der Längsachse des Führungsabschnitts (15, 16) erstreckenden Bewegungsbahn (B1, B2) bewegbar gelagert relativ zu dem Führungsabschnitt (15, 16) an dem Führungsabschnitt (15, 16) angeordnet oder ausgebildet ist.

4. Vorrichtung nach Anspruch 2 oder 3, **gekennzeichnet durch** ein abstützeinrichtungsseitig angeordnetes oder ausgebildetes Führungselement, welches unter Ausbildung einer Führungseinrichtung, welche zur Führung einer Bewegung derAbstützeinrichtungen (4, 5) in der wenigstens einen durch den wenigstens einen Bewegungsfreiheitsgrad definierten Bewegungsbahn (B1, B2) eingerichtet ist, mit dem lünettengrundkörperseitigen Führungsabschnitt zusammenwirkt.

5. Vorrichtung nach einem der vorhergehenden Ansprüche, **dadurch gekennzeichnet, dass** die Abstützeinrichtungen (4, 5) bewegungsgekoppelt sind.

6. Vorrichtung nach einem der vorhergehenden Ansprüche, **dadurch gekennzeichnet, dass** der wenigstens Bewegungsfreiheitsgrad ein translatorischer, insbesondere linearer, Bewegungsfreiheitsgrad und die durch den wenigstens einen Bewegungsfreiheitsgrad definierte Bewegungsbahn (B1, B2) eine translatorische, insbesondere lineare, Bewegungsbahn (B1, B2) ist.

7. Vorrichtung nach einem der vorhergehenden Ansprüche, **gekennzeichnet durch** wenigstens eine Antriebseinrichtung (14), welche zur Erzeugung einer wenigstens eine Abstützeinrichtung (4, 5) in eine Bewegung in dem wenigstens einen Bewegungsfreiheitsgrad versetzenden Antriebskraft eingerichtet ist.

8. Vorrichtung nach einem der vorhergehenden Ansprüche, **gekennzeichnet durch** wenigstens eine Spanschutzeinrichtung (20), welche eingerichtet ist, die Ablagerung von bei der, insbesondere spanenden, Bearbeitung eines Werkstücks (2) entstehendem Abtragsmaterial vor der Ablagerung an funktionsrelevanten Abschnitten der Lünette (1) zu verhindern.

9. Vorrichtung nach einem der vorhergehenden Ansprüche, **gekennzeichnet durch** wenigstens eine wenigstens eine, insbesondere abstützeinrichtungsseitig angeordnete oder ausgebildete Abstreifeinrichtung (23), welche eingerichtet ist, insbesondere durch entsprechende Bewegung der Abstützeinrichtungen (4, 5), ein Abstreifen bzw. Entfernen von gegebenenfalls auf den Führungsabschnitten (18) angelagertem Abtragsmaterial von den Führungsabschnitten (18) zu ermöglichen.

10. Vorrichtung nach einem der vorhergehenden Ansprüche, **gekennzeichnet durch** eine Sperreinrichtung, welche zur Sperrung einer Bewegung der Abstützeinrichtungen (4, 5), insbesondere zur Sperrung einer in eine Betriebs- oder Nichtbetriebsstellung bewegten Abstützeinrichtung (4, 5) in der Betriebs- oder Nichtbetriebsstellung, eingerichtet ist.

## Claims

1. Device for machining of an in elongate workpiece (2) that is to be machined, comprising: a milling tool and a steady rest (1) for supporting an elongate workpiece (2) that is to be mechanically processed, in particular machined, wherein the steady rest comprises:
a steady rest main body (3) that can be arranged in the device,
at least one two means (4, 5) that are arranged or formed on the steady rest main body (3) and each intended for supporting a workpiece that is to be mechanically machined, which support means each comprises at least one support element (6, 7) that supports a workpiece (2) that is to be supported, wherein the support means (4, 5) each are a clamping or gripping means or comprise same and the at least one support element is a clamping or gripping element or comprises same; wherein
the support means (4, 5) are each arranged or formed on the steady rest main body (3) so as to be movable, relative to the steady rest main body (3), in at least one degree of freedom of movement that defines a movement path (B1, B2),
**characterized in that**
the support means (4, 5) are each mounted so as to be movable between an operating position in which support for a workpiece (2) to be supported takes place, wherein the support means (4, 5) are clamped or gripped against the workpiece (2) to be supported, and
a non-operating position in which support of a workpiece (2) to be supported does not take place; wherein
in the operating position of the support means (4, 5), a possibility for a passage is provided for the milling tool to pass through the steady rest (1), such that the milling tool can move along the longitudinal axis of a workpiece that is supported by the steady rest (1) and is to be machined via the possibility for a passage in the direction of the longitudinal axis of the workpiece (2) that is to be machined.

2. Device according claim 1, **characterized in that** the steady rest main body (3) comprises two in particular ramp-like guide portions (15, 16) that are arranged so as to be at an angle relative to one another, the support means (4, 5) each being arranged or formed on a guide portion (15, 16) of the steady rest main body (3) so as to be movable, in at least one degree of freedom of movement, relative to a guide portion (15, 16) of the steady rest main body (3).

3. Device according to claim 2, **characterized in that** each guide portion (15, 16) is elongate, the support means (4, 5) being arranged or formed on the guide portion (15, 16) in a manner so as to be movable relative to the guide portion (15, 16), in a movement path (B1, B2) that extends along the longitudinal axis of the guide portion (15, 16), in particular in parallel therewith.

4. Device according to either claim 2 or claim 3, **characterized by** a guide element which is arranged or formed on the support means side and which cooperates with the guide portion on the steady rest main body side, forming a guide means which is designed for guiding a movement of the support means (4, 5) in the at least one movement path (B1, B2) defined by the at least one degree of freedom of movement.

5. Device according to any of the preceding claims, **characterized in that** the support means (4, 5) are motion-coupled.

6. Device according to any of the preceding claims, **characterized in that** the at least one degree of freedom of movement is a translational, in particular linear, degree of freedom of movement, and the movement path (B1, B2) defined by the at least one degree of freedom of movement is a translational, in particular linear, movement path (B1, B2).

7. Device according to any of the preceding claims, **characterized by** at least one drive means (14) which is designed for generating a drive force that causes at least one support means (4, 5) to move in the at least one degree of freedom of movement.

8. Device according to any of the preceding claims, **characterized by** at least one chip protection means (20) which is designed to prevent deposition of cut material resulting during the processing, in particular machining, of a workpiece (2) from being deposited on functionally relevant portions of the steady rest (1).

9. Device according to any of the preceding claims, **characterized by** at least one scraper means (23) which is in particular arranged or formed on the support means side and is designed to allow for scraping or removal, from the guide portions (18), of cut material that may have been deposited on the guide portions (18), by means of a corresponding movement of the support means (4, 5).

10. Steady rest according to any of the preceding claims, **characterized by** a blocking means which is designed for blocking a movement of the support means (4, 5), in particular for blocking a support means (4, 5), moved into an operating or non-operating position, in the operating or non-operating position.

## Revendications

1. Dispositif pour l'usinage par enlèvement de copeaux d'une pièce allongée à usiner par enlèvement de copeaux, comprenant un outil de fraisage et une lunette (1) pour supporter une pièce allongée (2) à usiner par enlèvement de copeaux, la lunette (1) comprenant :
un corps de base de lunette (3) pouvant être agencé dans le dispositif,
deux appareils de support (4, 5) agencés ou configurés sur le corps de base de lunette (3), chacun adapté pour supporter une pièce (2) à usiner par enlèvement de copeaux, qui comprennent chacun au moins un élément de support (6, 7) supportant une pièce (2) à supporter, les appareils de support (4, 5) étant ou comprenant chacun un appareil de blocage ou de serrage, et l'au moins un élément de support (6, 7) étant ou
comprenant un élément de blocage ou de serrage,
les appareils de support (4, 5) étant chacun agencés ou configurés sur le corps de base de lunette (3) en étant montés de manière mobile par rapport au corps de base de lunette (3) selon au moins un degré de liberté de mouvement définissant une trajectoire de mouvement (B1, B2),
les appareils de support (4, 5) étant chacun montés de manière mobile entre une position de fonctionnement dans laquelle un support d'une pièce (2) à supporter est possible, les appareils de support (4, 5) pouvant être bloqués ou serrés contre la pièce (2) à supporter, et une position de non-fonctionnement dans laquelle un support d'une pièce (2) à supporter n'est pas possible,
dans la position de fonctionnement des appareils de support (4, 5), une possibilité de passage pour l'outil de fraisage étant créée, de telle sorte que l'outil de fraisage peut passer le long de l'axe longitudinal d'une pièce (2) à usiner par enlèvement de copeaux, supportée au moyen de la lunette (1), par le biais de la possibilité de passage dans la direction de l'axe longitudinal de la pièce (2).

2. Dispositif selon la revendication 1, **caractérisé en ce que** le corps de base de lunette (3) comprend deux sections de guidage (15, 16) orientées angulairement l'une par rapport à l'autre, notamment en forme de rampe, les appareils de support (4, 5) étant chacun agencés ou configurés sur une section de guidage (15, 16) du corps de base de lunette (3) en étant montés de manière mobile par rapport à une section de guidage (15, 16) du corps de base de lunette (3) selon au moins un degré de liberté de mouvement.

3. Dispositif selon la revendication 2, **caractérisé en ce qu'**une section de guidage respective (15, 16) est configurée sous forme allongée, l'appareil de support (4, 5) étant agencé ou configuré sur la section de guidage (15, 16) en étant monté de manière mobile par rapport à la section de guidage (15, 16) dans une trajectoire de mouvement (B1, B2) s'étendant, notamment parallèlement, le long de l'axe longitudinal de la section de guidage (15, 16).

4. Dispositif selon la revendication 2 ou 3, **caractérisé par** un élément de guidage agencé ou configuré du côté de l'appareil de support, qui coopère avec la section de guidage du côté du corps de base de lunette, en formant un appareil de guidage qui est adapté pour guider un mouvement des appareils de support (4, 5) dans l'au moins une trajectoire de mouvement (B1, B2) définie par l'au moins un degré de liberté de mouvement.

5. Dispositif selon l'une quelconque des revendications précédentes, **caractérisé en ce que** les appareils de support (4, 5) sont couplés en mouvement.

6. Dispositif selon l'une quelconque des revendications précédentes, **caractérisé en ce que** l'au moins un degré de liberté de mouvement est un degré de liberté de mouvement en translation, notamment linéaire, et la trajectoire de mouvement (B1, B2) définie par l'au moins un degré de liberté de mouvement est une trajectoire de mouvement (B1, B2) en translation, notamment linéaire.

7. Dispositif selon l'une quelconque des revendications précédentes, **caractérisé par** au moins un appareil d'entraînement (14) qui est adapté pour générer une force d'entraînement déplaçant au moins un appareil de support (4, 5) dans un mouvement selon l'au moins un degré de liberté de mouvement.

8. Dispositif selon l'une quelconque des revendications précédentes, **caractérisé par** au moins un appareil de protection contre les copeaux (20), qui est adapté pour empêcher le dépôt de matériau enlevé produit lors de l'usinage, notamment par enlèvement de copeaux, d'une pièce (2) avant le dépôt sur des sections de la lunette (1) importantes pour le fonctionnement.

9. Dispositif selon l'une quelconque des revendications précédentes, **caractérisé par** au moins un appareil de raclage (23), agencé ou configuré notamment du côté de l'appareil de support, qui est adapté, notamment par un mouvement correspondant des appareils de support (4, 5), pour permettre un raclage ou une élimination de matériau enlevé des sections de guidage (18) éventuellement déposé sur les sections de guidage (18).

10. Dispositif selon l'une quelconque des revendications précédentes, **caractérisé par** un appareil de blocage qui est adapté pour bloquer un mouvement des appareils de support (4, 5), notamment pour bloquer un appareil de support (4, 5) déplacé dans une position de fonctionnement ou de non-fonctionnement dans la position de fonctionnement ou de non-fonctionnement.
